# EUROPEAN PATENT APPLICATION

(11) **EP 4 557 466 A1**
(43) Date of publication of application: **21.05.2025**
(21) Application number: 23860842.6
(22) Date of filing: 29.08.2023
(51) Int. Cl.: H01M 50/148, H01M 50/167, H01M 50/249

(54) **BATTERY PACK AND DEVICE INCLUDING SAME**

(30) Priority: 31.08.2022 KR 20220110388; 28.08.2023 KR 20230112652
(71) Applicant: LG Energy Solution, Ltd., Seoul 07335 (KR)
(72) Inventor: PARK, Jin Yong, Daejeon 34122 (KR); SHIN, Song Ju, Daejeon 34122 (KR); KIM, Seung Joon, Daejeon 34122 (KR); LEE, Myungwoo, Daejeon 34122 (KR); KWON, Wooyong, Daejeon 34122 (KR); KIM, Insoo, Daejeon 34122 (KR); MOON, Duck Hee, Daejeon 34122 (KR); JEONG, Jongha, Daejeon 34122 (KR); CHI, Ho June, Daejeon 34122 (KR); LEE, Taekyeong, Daejeon 34122 (KR); KIM, Kyungwoo, Daejeon 34122 (KR); HWANG, Ji Soo, Daejeon 34122 (KR); JUNG, Seyun, Daejeon 34122 (KR); KANG, Jongmo, Daejeon 34122 (KR)
(74) Representative: Plasseraud IP
(86) International application number: PCT/KR2023/012798
(87) International publication number: WO 2024/049166

(57) **Abstract**

A battery pack includes a plurality of cell units each including at least one battery cell and a cell cover surrounding and supporting the at least one battery cell and a pack case accommodating and supporting the plurality of cell units in an internal space, wherein the cell cover includes: a first cover portion covering one side of the at least one battery cell, a second cover portion covering the other side of the at least one battery cell, and a cap portion connecting the first cover portion to the second cover portion and covering an upper end portion of the at least one battery cell, wherein the cap portion is detachably coupled to the first cover portion and the second cover portion.

## Description

### [Technical Field]

### CROSS REFERENCE TO RELATED APPLICATION(S)

This application claims benefit of priority to Korean Patent Application Nos. 10-2022-0110388 filed on August 31, 2022 and 10-2023-0112652 filed on August 28, 2023 in the Korean Intellectual Property Office, the disclosures of which are incorporated herein by reference in their entireties.

The present invention relates to a battery pack and a device including the same, and more particularly, to a battery pack which is easy to handle and install and has enhanced safety, while improving energy density, and a device including the same.

### [Background Art]

In general, secondary batteries refer to batteries that may be repeatedly charged and discharged, such as lithium ion batteries, lithium polymer batteries, nickel cadmium batteries, nickel hydrogen batteries, and nickel zinc batteries.

Recently, as secondary batteries have been applied to devices that require high power voltage and large charge capacity, such as electric vehicles or energy storage systems (ESSs), and battery packs, which are manufactured by connecting a plurality of battery cells in series or parallel to form a battery module and connecting a plurality of battery modules in series or parallel have been widely used.

However, as disclosed in related art documents 1 and 2, the existing technology configures a battery module by accommodating battery cells in a box-shaped metal case and then accommodating these battery modules in a battery pack case to manufacture a battery pack, which leads to a problem of increasing a weight and volume of the overall battery pack and reducing energy density of the battery pack.

In addition, when an existing cell-to-pack scheme in which a plurality of battery cells are directly mounted in a pack case of a battery pack to increase the energy density of the battery pack is applied to a pouch-type battery cell with a soft case, it may be difficult to handle or stack the plurality of battery cells at the same time and there is a risk of damage to the battery cells in the process of mounting the battery cells in the pack case.

Moreover, in the existing cell-to-pack scheme, the plurality of battery cells are arranged to be space-intensively densely packed inside the pack case, making it difficult to discharge gases or flames generated during thermal runaway of battery cells in an intended direction, and thermal runaway occurring in some battery cells may bring about serial thermal runaway in the remaining battery cells.

### [Related art document]

Related art 1: Korean Patent No. 10-2379227
Related art 2: Korean Application Publication No. 10-2022-0052183

### [Disclosure]

### [Technical Problem]

The present invention attempts to provide a battery pack and a device including the same capable of reducing an overall weight and volume, facilitating handling and installation of battery cells built in the battery pack, while increasing energy density, and preventing chain thermal runaway by discharging gases or flames in an intended direction during thermal runaway of the battery cells.

However, the problems to be solved by the exemplary embodiments of the present invention are not limited to the aforementioned problems, and other problems not described may be expanded to the extent that may be clearly understood by those skilled in the art from the description of the present invention.

### [Technical solution]

According to an exemplary embodiment of the present invention, a batter pack includes: a plurality of cell units each including at least one battery cell and a cell cover surrounding and supporting the at least one battery cell; and a pack case accommodating and supporting the plurality of cell units in an internal space, wherein the cell cover includes: a first cover portion covering one side of the at least one battery cell; a second cover portion covering the other side of the at least one battery cell; and a cap portion connecting the first cover portion to the second cover portion and covering an upper end portion of the at least one battery cell, wherein the cap portion is detachably coupled to the first cover portion and the second cover portion.

The cap portion may be coupled to the first cover portion and the second cover portion in a snapfit manner or a press-fitting manner.

Each of the first cover portion and the second cover portion may include a first fastening groove and a second fastening groove at an upper end portion adjacent to the cap portion, and the cap portion may include a first fastening protrusion fastened to the first fastening groove in a snapfit manner or a press-fitting manner and a second fastening protrusion fastened to the second fastening groove in the snapfit manner or the press-fitting manner.

**The** first fastening groove and the second fastening groove may be formed as the upper end portions of the first cover portion and the second cover portion are curved inwardly of the cell cover in which the at least one battery cell is located.

**The** first fastening protrusion may be formed by bending one end portion of the cap portion adjacent to the first cover portion, and the second fastening protrusion may be formed by bending the other end portion of the cap portion adjacent to the second cover portion.

The first cover portion and the second cover portion may further include a blocking portion supporting a lower portion of the at least one battery cell at a lower end portion opposite to the upper end portion.

The blocking portion may be formed to extend from the lower end portion of the first cover portion and the second cover portion in an inward direction of the cell cover.

The blocking portion may include a locking structure formed to be bent inwardly of the cell cover from the lower end portion of the first cover portion and the second cover portion.

The blocking portion may include a bent structure bent from the lower end portion of the first cover portion and the second cover portion toward the cap portion and then bent roundly to an opposite side of the cap portion.

The blocking portion may include at least one insertion groove formed by partially removing the blocking portion in a longitudinal direction of the cell cover.

The cell cover may include stainless steel (SUS).

According to an exemplary embodiment of the present invention, a device includes the at least one battery pack described above.

### [Advantageous Effects]

According to the present invention, the battery pack and the device including the same capable of reducing an overall weight and volume, facilitating handling and installation of battery cells built in the battery pack, while increasing energy density, and preventing chain thermal runaway by discharging gases or flames in an intended direction during thermal runaway of the battery cells may be provided.

The effects of the present invention are not limited to the effects mentioned above, and other effects not mentioned will be clearly understood by those skilled in the art from the description of the claims.

### [Description of the Drawings]

FIG. 1 illustrates a battery pack according to an exemplary embodiment of the present invention.
FIG. 2 is a perspective view illustrating a cell unit of a battery pack according to an exemplary embodiment of the present invention.
FIG. 3 is an exploded perspective view illustrating the cell unit shown in FIG. 2.
FIG. 4 is a cross-sectional view illustrating the cell cover shown in FIG. 3.
FIG. 5 is a perspective view illustrating a cell cover according to a modified example.
FIG. 6 is a cross-sectional view illustrating the cell cover shown in FIG. 5.
FIG. 7 is a cross-sectional view illustrating a cell cover according to another modified example.
FIG. 8 is a diagram illustrating a device according to another exemplary embodiment of the present invention.

### [Mode for Invention]

Hereinafter, exemplary embodiments of the present invention will be described in detail with reference to the accompanying drawings to allow those skilled in the art to practice the present invention

The present invention may be implemented in various different forms and is not limited to the examples as described herein.

In the drawings, portions irrelevant to the description are omitted to clearly describe the present invention, and like reference numerals denote like elements throughout the specification.

The size and thickness of each component shown in the drawings may be arbitrarily shown for convenience of explanation, and therefore, the present invention is not necessarily limited to the shown exemplary embodiments in the drawings. In the drawings, the thickness of layers, films, panels, regions, etc., are exaggerated for clarity. Also, in the drawings, the thickness of partial layers and regions may be exaggerated for convenience of explanation.

It will be understood that when an element such as a layer, film, region, or substrate is referred to as being "on" another element, it may be directly on the other element or intervening elements may also be present. In contrast, when an element is referred to as being "directly on" another element, there are no intervening elements present. Further, when an element is "above" or "on" the reference portion, it may mean that the element is positioned above or below the reference portion, and it may not necessarily mean that the element is "above" or "on" toward an opposite direction of gravity. Meanwhile, similar to the case where it is described as being located "on" or "above" another portion, the case where it is described as being located "below" or "under" another portion will also be understood with reference to the above-mentioned contents.

**In** addition, unless explicitly described to the contrary, the word "comprise", and variations such as "comprises" or "comprising", will be understood to imply the inclusion of stated elements but not the exclusion of any other elements.

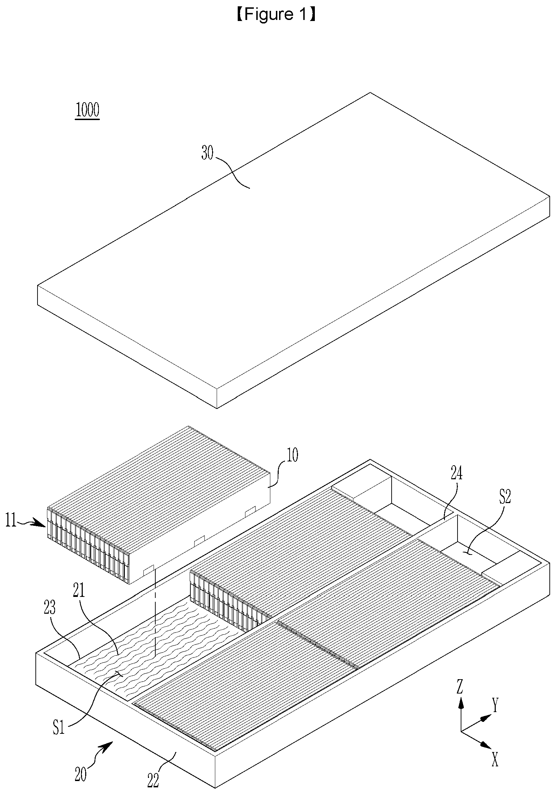

Hereinafter, a battery pack 1000 according to an exemplary embodiment of the present invention will be described with reference to FIG. 1.

FIG. 1 is a diagram illustrating a battery pack according to an exemplary embodiment of the present invention.

As shown in FIG. 1, a battery pack 1000 of the present invention may include a plurality of cell unit blocks 11, a pack case 20, and an upper cover 30.

The cell unit block 11 may include a plurality of cell units 10, and the plurality of cell units may be stacked in one direction. As will be described again below, each cell unit 10 may include at least one battery cell and a cell cover partially surrounding and supporting the outside of the at least one battery cell. In this case, the at least one battery cell may include a pouch-type battery cell.

The pack case 20 may have a seating structure in which the cell unit block 11 is directly seated without a separate case, and may be configured to accommodate and support a plurality of cell unit blocks 11 in separate internal spaces. Also, the upper cover 30 may be configured in the form of a cover for an upper opening of the pack case 20. Here, the upper cover 30 may be configured in the form of a box with an open bottom.

Meanwhile, in order to accommodate a plurality of cell unit blocks 11, the pack case 20 may include a lower plate 21 on which the cell unit blocks 11 are seated and a sidewall 22 coupled to the lower plate 21 to form an internal space S1 accommodating the cell unit blocks.

A gas valve (not shown) discharging an internal gas of the battery pack 1000 may be provided on an outer surface of the side wall 22, and a gas inlet through which a gas occurring in the cell unit block 11 is introduced may be provided on an inner surface of the side wall 22 adjacent to the internal space S1. In addition, the side wall 22 may have a side gas channel therein. One end of the side gas channel may be connected to the gas inlet and the other end thereof may extend along the inside of the side wall 22 to be connected to the gas valve.

In this case, a gas venting path leading to the gas inlet and side gas channel of the side wall 22 and the gas valve may be individually provided for each cell unit block. That is, a gas discharged from the first cell unit block is discharged through a first gas venting path leading to the first gas inlet, the first side gas channel, and the first gas valve, and a gas discharged from the second cell unit block may be configured to be discharged through a second gas venting path leading to a second gas inlet, a second side gas channel, and a second gas valve separately provided from each of the first gas inlet, the first side gas channel, and the first gas valve.

Meanwhile, the pack case 20 may further include a partition 24 that divides the internal space S1 into a plurality of spaces. In addition, the pack case 20 may have an accommodating space S2 that accommodates various electrical components required for the battery pack 1000.

The lower plate 21 may include a heat sink 23 in thermal contact with the cell unit block 11. The heat sink 23 may be in thermal contact with the cell unit block 11, may be configured to cool the cell unit block 11, and may be disposed inside or outside the lower plate 21. In addition, the heat sink 23 may be formed of a metal material with high thermal conductivity and heat resistance to have cooling performance. In addition, although not shown, a thermal resin layer (not shown) may be formed below the cell unit block 11. The thermal resin layer may transfer heat to the heat sink 23 so that heat generated by the battery cell may be dissipated through the heat sink 23. In addition, since the thermal resin layer has adhesive properties, an upright state of the cell unit 10 included in the cell unit block 11 may be maintained more stably.

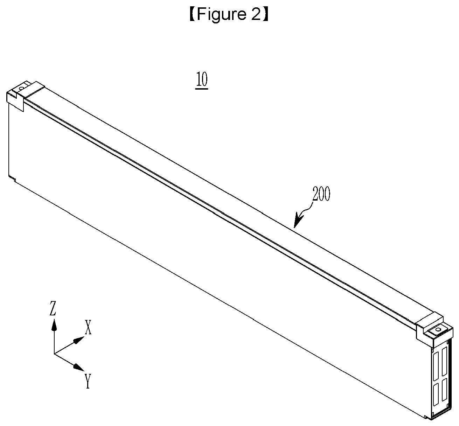

Next, the configuration of the cell unit 10 will be described in more detail with reference to FIGS. 2 to 4.

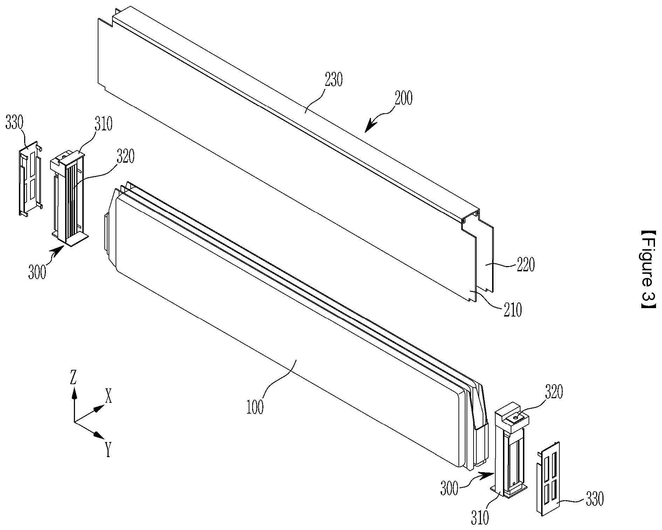

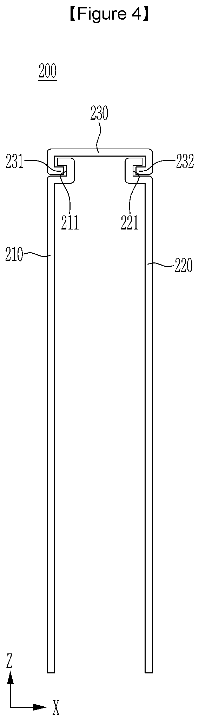

FIG. 2 is a perspective view illustrating a cell unit of a battery pack according to an exemplary embodiment of the present invention, FIG. 3 is an exploded perspective view illustrating the cell unit shown in FIG. 2, and FIG. 4 is a cross-sectional view illustrating the cell cover shown in FIG. 3.

As shown in FIGS. 2 and 3, the cell unit 10 may include at least one battery cell 100 and a cell cover 200 partially covering the outside of the battery cell 100. This cell cover 200 covers both sides and the top of at least one battery cell 100 and may have a structure that is open to the front, rear, and lower sides of the battery cell 100.

Referring to FIG. 3, the cell unit 10 may include at least one battery cell 100, the cell cover 200, and a busbar assembly 300.

The battery cell 100 of the cell unit 10 corresponds to a basic unit of charging and discharging and may be manufactured by accommodating an electrode assembly and an electrolyte material inside a pouch case and sealing the pouch case. In this case, the electrode assembly may be manufactured by interposing a separator between a positive electrode and a negative electrode.

In addition, electrode leads electrically connected to the electrode assembly may be provided at the front and rear ends of the battery cell 100. The battery cell may be configured in the form of a pouch. One cell unit 10 may include one or more battery cells 100, and when a plurality of battery cells 100 are included, the plurality of battery cells 100 may be stacked in at least one direction. For example, referring to what is shown in FIG. 3, a plurality of battery cells 100 may be stacked and arranged in an X-axis direction of the drawing. As the battery cell 100, various types of battery cells 100 known at the time of filing of the present invention may be employed, and therefore, a detailed description of the configuration of the battery cell 100 is omitted.

The cell cover 200 may be configured to partially surround and support the outside of at least one battery cell 100. In this case, the cell cover 200 may be configured to support at least one pouch-type battery cell in an upright state.

For example, as shown in FIG. 3, the cell cover 200 may be configured to partially cover the outside of the three pouch-type battery cells 100 and support the battery cells 100 in an upright state. Accordingly, the battery cells 100 may be directly seated and accommodated inside the pack case 20 without a module case. In particular, in the case of the battery cells 100, an exterior material thereof is formed of a soft material, so it is vulnerable to external shock and has low hardness. Therefore, it is not easy to accommodate the battery cell 100 itself inside the pack case 20 without accommodating the battery cell in a module case. However, in the case of the present exemplary embodiment, the plurality of battery cells 100 are coupled to the cell cover 200 in a state in which at least a portion thereof is surrounded by the cell cover 200, and are directly accommodated inside the pack case 20, and thus, the stacked state may be maintained stably.

According to the present exemplary embodiment of the present invention, there is no need to additionally provide the battery pack 1000 with a module case, a stacking frame, or a fastening member, such as a bolt for maintaining the stacked state of the cells. Accordingly, a space occupied by other components, such as a module case or a stacking frame, or a space for securing tolerance may be eliminated. Therefore, since the battery cells may occupy more space as large as the removed space, the energy density of the battery pack may be further improved.

In addition, according to this aspect of the present invention, since a module case, a stacking frame, a bolt, etc. are not provided, the volume and weight of the battery pack may be reduced and the manufacturing process may be simplified.

In addition, according to this aspect of the present invention, handling of the battery cell 100 may become easier. For example, when accommodating a plurality of battery cells 100 inside a pack case, the battery cells 100 may be held by a jig or the like. Here, the jig may not directly hold the battery cell 100, but may hold the cell cover 200 surrounding the battery cell 100. Accordingly, damage or breakage to the battery cell 100 due to the jig may be prevented.

In addition, according to this aspect of the present invention, the cell cover 200 may be coupled to the battery cell 100, so that the battery cell 100 may be effectively protected without a module case.

In an exemplary embodiment, the cell cover 200 may include a first cover portion 210 covering one side of at least one battery cell 100, a second cover portion 220 covering the other side of the at least one battery cell 100, and a cap portion 230 connecting the first cover portion 210 to the second cover portion 220 and covering the top of the at least one battery cell 100. That is, the cell cover 200 may be configured to cover the remaining three sides except for the front side, the rear side, and the lower side in which the electrode leads protrude.

For example, the cell cover 200 may be configured to cover three sides of at least one battery cell 100, and may have an overall cross-section of an 'n' shape, a 'u' shape, or a ' 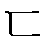 ' shape.

As will be described again below, the cap portion 230 may be detachably coupled to the first cover portion 210 and the second cover portion 220 and may be coupled, for example, in a snapfit or press-fitting manner.

In this manner, the cell cover 200 having a simplified structure may be formed of a metal material with higher rigidity than the case of the battery cell 100 and may protect the at least one battery cell 100 covered by the cell cover 200 from external shock or vibration. For example, the cell cover 200 may be formed of a material including stainless steel (SUS), which is easy to process and has high corrosion resistance. In this manner, when the cell cover 200 is formed of a steel material, it has excellent mechanical strength and rigidity, so the stacked state of the battery cells 100 may be more stably supported. In addition, in this case, it is possible to more effectively prevent damage or breakage to the battery cell 100 from external impacts, such as acicular bodies. In addition, in this case, handling of the battery cell may become easier.

In addition, as in the exemplary embodiment described above, when the cell cover 200 is formed of a steel material, the overall structure may be stably maintained due to a high melting point thereof, when a flame occurs from the battery cell 100. In particular, in the case of steel material, since the melting point is higher than that of aluminum material, the steel material may not melt even with the flame emitted from the battery cell 100 and a shape thereof may be stably maintained. Accordingly, excellent flame propagation prevention and delay effects between battery cells 100, venting control effects, etc. may be secured.

Meanwhile, the busbar assembly 300 is coupled to the electrode lead exposed to the side not covered by the cell cover 200. The busbar assembly 300 includes a busbar frame 310 and a busbar 320 coupled thereto. That is, the busbar 320 is electrically connected to the electrode lead of at least one battery cell 100 covered by the cell cover 200, and the busbar frame 310 may be configured to support the busbar 320. In addition, the busbar assembly 300 may be configured to electrically connect a plurality of battery cells 100 to each other. For example, the busbar assembly 300 may be coupled to the electrode leads of the plurality of battery cells 100 to electrically connect the plurality of battery cells 100 in series and/or in parallel. The busbar assembly 300 may be coupled to the cell cover 200 in various manners. For example, the busbar assembly 300 may be coupled and fixed to the cell cover 200 through various fastening methods, such as adhering, welding, press-fitting, hook coupling, bolting, and riveting.

The insulating cover 330 may be configured to prevent a short-circuit of the electrode lead or busbar 320. To this end, the insulating cover 330 may be formed of a polymer synthetic resin with insulating properties, prevent the busbar assembly 300 from being exposed to the outside, and secure and maintain electrical insulation.

Although not shown in FIGS. 2 and 3, the cell unit 10 may further include a clamping member configured to clamp the cell cover 200. The clamping member may clamp the cell cover 200 into which at least one battery cell 100 is inserted and may be configured to prevent both ends of the cell cover 200 (the end of the first cover portion 210 and the end of the second cover portion 220) from being open or prevent the inserted battery cell 100 from separating from the cell cover 200. The clamping member may be formed of tape or may be formed of an elastic metal material.

In FIG. 3, there are three battery cells 100 covered by one cell cover 200, but the number of battery cells 100 covered by the cell cover 200 may variously change according to the scale of the cell cover 200.

Hereinafter, the configuration of the cell cover 200 will be described in more detail with reference to FIG. 4.

As shown in FIG. 4, the cell cover 200 may include the first cover portion 210, the second cover portion 220, and the cap portion 230.

The first cover portion 210 may be configured to cover one side of at least one battery cell 100. The first cover portion 210 may be integrally formed using a metal plate.

The second cover portion 220 may face the first cover portion 210 at a predetermined distance and may be configured to cover the other side of the at least one battery cell 100. The second cover portion 220 may be integrally formed using a metal plate.

The cap portion 230 may be configured to connect the first cover portion 210 to the second cover portion 220 and cover an upper end portion of the at least one battery cell 100. The cap portion 230 may be integrally formed using a metal plate.

In addition, the cap portion 230 may be detachably coupled to the first cover portion 210 and the second cover portion 220 and may be configured to be coupled, for example, in a snapfit manner or a press-fitting manner. To this end, the first cover portion 210 and the second cover portion 220 may include a first fastening groove 211 and a second fastening groove 221 at the upper end portions, respectively, and the cap portion 230 may include a first fastening protrusion 231 fastened to the first fastening groove 211 of the first cover portion 210 in a snapfit or press-fitting manner and a second fastening protrusion 232 fastened to the second fastening groove 212 of the second cover portion 220 in a snap fit or press-fitting manner. In the case of coupling the cap portion 230 in the snapfit manner or a press-fitting manner, when internal pressure of the cell unit 100 increases, the cap portion 230 may be separated by the internal pressure, thereby inducing gas inside of the cell unit 100 to be discharged in an upward direction.

Meanwhile, in an exemplary embodiment, the first cover portion 210 and the second cover portion 220 may have upper end portion curved to the inner side in which the at least one battery cell 100 is located, thereby forming the first and second fastening grooves 211 and 221.

In addition, one end portion of the cap portion 230 in the width direction (the X-axis direction) adjacent to the first cover portion 210 may be bent toward the inside of the cell cover 200 to form the first fastening protrusion 231, and the other end portion thereof in the width direction adjacent to the second cover portion 220 may be bent toward the inside of the cell cover 200 to form the second fastening protrusion 232. The first and second fastening protrusions 231 and 232 of the cap portion 230 are coupled to the first fastening groove 211 and the second fastening groove 221, respectively. Various coupling methods may be applied, and the first and second fastening protrusions 231 and 232 may be coupled in a snapfit or press-fitting manner. For example, when coupled in a press-fitting manner, in a state in which the fastening protrusions 231 and 232 and the fastening grooves 211 and 221 are formed to extend in the longitudinal direction (a Y-axis direction of the drawing) of the cell cover 200, the fastening protrusions 231 and 232 may be slidably fastened in the longitudinal direction of the cell cover 200 from one end portion of the fastening grooves 211 and 221. However, the present invention is not limited thereto and the fastening protrusions 231 and 232 may be coupled in various manners.

Meanwhile, the cap portion 230 may be configured to be spaced apart from the battery cell 100 inserted between the first cover portion 210 and the second cover portion 220 at a predetermined distance to form a gas transfer passage.

As such, according to an exemplary embodiment of the present invention, the three sides forming the cell cover 200 are not formed integrally, but the first cover portion 210 covering one side of the at least one battery cell 100, the second cover portion 220 covering the other side of the at least one battery cell 100, and the cap portion 230 formed to be detachable from the first cover portion 210 and the second cover portion 220, connecting the first cover portion 210 and the second cover portion 220, and covering the upper end portion of the at least one battery cell 100 are configured to be coupled to each other, thereby facilitating manufacturing and assembly of the cell cover 200 and improving flatness.

In addition, since the cap portion 230 is formed to be detachable from the first cover portion 210 and the second cover portion 220 and is coupled to the first cover portion 210 and the second cover portion 220 in a snapfit or press-fitting manner, when gas pressure inside the cell unit 100 increases, the cap portion 230 may be separated from the first cover portion 210 and the second cover portion 220, and as a result, gas inside the cell unit 100 may be induced to be discharged upwardly.

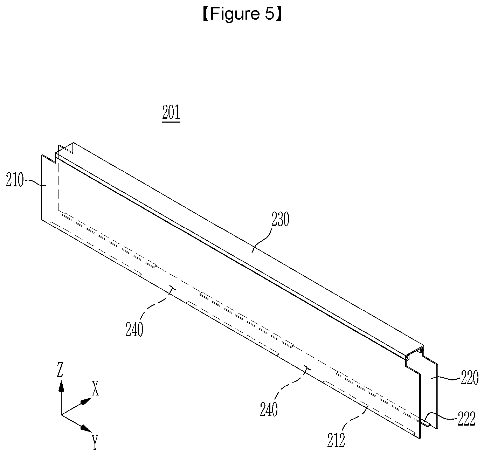

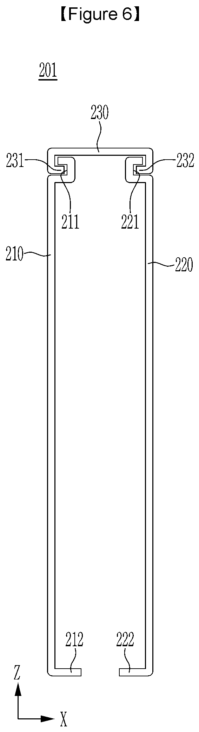

Next, a cell cover according to a modified example of the present invention will be described with reference to FIGS. 5 and 6.

FIG. 5 is a perspective view illustrating a cell cover according to a modified example, and FIG. 6 is a cross-sectional view illustrating the cell cover shown in FIG. 5.

As shown in FIGS. 5 and 6, the cell cover 201 according to a modified exemplary embodiment, like the cell cover 200 shown in FIGS. 3 and 4, the cell cover 201 may include a first cover portion 210 and a second cover portion 220 and a cap portion 230. In addition, the cell cover 201 may further include blocking portions 212 and 222.

The blocking portions 212 and 222 may be configured to block removal of the at least one battery cell 100 inserted between the first cover portion 210 and the second cover portion 220. That is, the blocking portions 212 and 222 may include a first blocking portion 212 extending from the end of the first cover portion 210 and a second blocking portion 222 extending from the end of the second cover portion 220, and the first and second blocking portions 212 and 222 may be configured to support the lower end portion of at least one battery cell 100.

The first and second blocking portions 212 and 222 may be bent inwardly of the cell cover 201 into which the battery cell 100 is inserted from the ends of the first cover portion 210 and the second cover portion 220, respectively, to form a locking structure. That is, the first and second blocking portions 212 and 222 may be bent from the ends of the lower portions, which are opposite to the upper portions in which the first and second fastening grooves 211 and 221 are formed, toward the inside in which the battery cell 100 is disposed, so that the battery cell 100 is placed.

The first and second blocking portions 212 and 222 may support the battery cell 100 inserted into the cell cover 201 and prevent the battery cell 100 from being removed, thereby preventing a change in position of the battery cell 100 or removal of the battery cell 100 to the outside of the cell cover 201, and thus, safety and reliability of the battery pack may be guaranteed.

In addition, the first and second blocking portions 212 and 222 may not be formed equally throughout, but may include portions that are not formed at predetermined intervals. In this manner, the portions removed in the longitudinal direction of the cell cover 200 without forming the first and second blocking portions 212 and 222 forms an insertion groove 240. A finger of the jig may be inserted into the insertion groove 240 during the manufacturing process, and the finger of the jig inserted through the insertion groove 240 may come into contact with inner surfaces of the first cover portion 210 and the second cover portion 220 to open the first cover portion 210 and the second cove portion 220 to both sides, so that a gap between the first cover portion 210 and the second cover portion 220 may change. This configuration may widen the gap between the first cover portion 210 and the second cover portion 220 to facilitate insertion of the battery cell 100 into the cell cover 201.

In this manner, since the insertion groove 240, into which the jig configured to change the gap between both ends of the cell cover 201 by contacting the inner surface of the cell cover 201 is inserted, is provided in the blocking portions 212 and 222 of the cell cover 201, the assembly process of inserting the battery cell 100 into the cell cover 201 may be facilitated and damage to the battery cell 100 during the assembly process may be prevented.

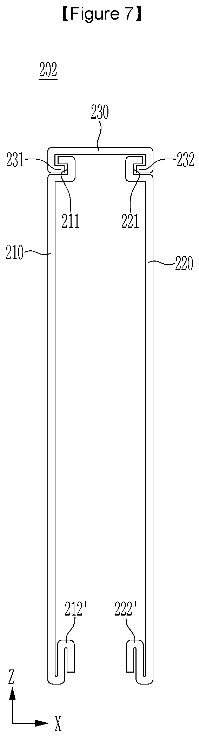

Hereinafter, a cell cover according to another modified example of the present invention will be described with reference to FIG. 7.

FIG. 7 is a cross-sectional view illustrating a cell cover according to another modified example.

As shown in FIG. 7, a cell cover 202 according to another exemplary embodiment may include the first cover portion 210, the second cover portion 220, the cap portion 230, and blocking portions 212' and 222', like the cell cover 201 shown in FIGS. 5 and 6.

In particular, the first and second blocking portions 212' and 222' of the cell cover 202 according to another modified example are located at each end of the first cover portion 210 and the second cover portion 220. It may include a bent structure that is bent toward the cap portion 230 and then bent round again toward the opposite side of the cap portion 230. In this manner, the first and second blocking portions 212' and 222' may be configured to support the battery cells 100 with round surfaces, thereby preventing damage to the soft battery cells 100, such as pouch cells.

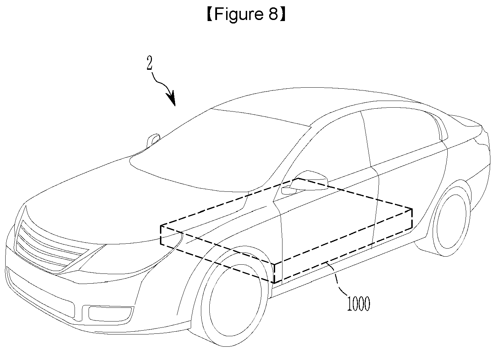

FIG. 8 is a diagram illustrating a device according to another exemplary embodiment of the present invention.

As shown in FIG. 8, a device according to an exemplary embodiment of the present invention may be a vehicle 2, and such a device may include at least one battery pack 1000 according to any one of the various exemplary embodiments described above.

In this manner, the battery pack 1000 provided in the vehicle 2 may provide electrical energy required for various operations of the vehicle 2.

For reference, of course, the battery pack according to the present invention may be applied to an energy storage system (ESS) and various devices other than vehicles.

As described above, according to the present invention, the plurality of battery cells 100 are not accommodated in a separate module case and mounted on a pack case of a battery pack, but are partially covered by the cell cover 200 having a simplified structure and directly mounted on the pack case, thereby reducing the weight and volume of the entire battery pack, facilitating safe handling and installation of the battery cells 100 during manufacturing of the battery pack, and reducing costs, while increasing energy density of the battery pack.

In addition, since the cell cover 200 is configured by coupling the first cover portion 210 covering one side of the at least one battery cell 100, the second cover portion 220 covering the other side of the at least one battery cell 100, and the cap portion 230 connecting the first cover portion 210 to the second cover portion 220 and covering the upper end portion of the at least one battery cell 100, manufacturing and assembly of the cell cover 200 may be facilitated and flatness may be improved.

In addition, since the cap portion 230 is coupled to the first cover portion 210 and the second cover portion 220 in a snapfit manner or a press-fitting manner, when gas pressure inside the cell unit increases, the cap portion 230 may be separated from the first cover portion 210 and the second cover portion 220, and as a result, the gas inside the cell unit may be induced to be discharged upwardly.

In addition, since the blocking portions 212 and 222 of the cell cover 201 support the battery cell 100 inserted into the cell cover 201 and block removal of the battery cell 100, thereby preventing a change in the position of the battery cell 100 and removal of the battery cell 100 to the outside of the cell cover 201, thereby guaranteing the safety and reliability of the battery pack.

In addition, since the insertion groove 240, into which the jig configured to contact the inner surface of the cell cover 201 and change the gap between both ends of the cell cover 201 is inserted, is provided in the blocking portions 212 and 222 of the cell cover 200, the assembly process of inserting the battery cell 100 into the cell cover 201 may be facilitated and damage to the battery cell 100 may be prevented.

Furthermore, it goes without saying that exemplary embodiments according to the present invention may solve various technical problems other than those mentioned in this specification in a related technical field as well as in the art.

So far, the present invention has been described with reference to specific exemplary embodiments. However, those skilled in the art will clearly understand that various modified exemplary embodiments may be implemented within the technical scope of the present invention. Therefore, the previously disclosed exemplary embodiments should be considered from an explanatory perspective rather than a limiting perspective. In other words, the scope of the true technical idea of the present invention is shown in the claims, and all differences within the scope of equivalents should be construed as being included in the present invention.

### [Description of reference numerals]

10: cell unit
11: cell unit block
20: pack case
30: upper cover
100: battery cell
200, 201, 202: cell cover
210: first cover portion
220: second cover portion
230: cap portion
211: first fastening recess
212: second fastening recess
231: first fastening protrusion
232: second fastening protrusion
212, 212': first blocking portion
222, 222': second blocking portion
240: insertion recess
300: busbar assembly
330: insulating cover
1000: battery pack

## Claims

1. A battery pack comprising:
a plurality of cell units each including at least one battery cell and a cell cover surrounding and supporting the at least one battery cell; and
a pack case accommodating and supporting the plurality of cell units in an internal space,
wherein the cell cover includes:
a first cover portion covering one side of the at least one battery cell;
a second cover portion covering the other side of the at least one battery cell; and
a cap portion connecting the first cover portion to the second cover portion and covering an upper end portion of the at least one battery cell,
wherein the cap portion is detachably coupled to the first cover portion and the second cover portion.

2. The battery pack of claim 1, wherein:
the cap portion is coupled to the first cover portion and the second cover portion in a snapfit manner or a press-fitting manner.

3. The battery pack of claim 1, wherein:
each of the first cover portion and the second cover portion includes a first fastening groove and a second fastening groove at an upper end portion adjacent to the cap portion, and
the cap portion includes a first fastening protrusion fastened to the first fastening groove in a snapfit manner or a press-fitting manner and a second fastening protrusion fastened to the second fastening groove in the snapfit manner or the press-fitting manner.

4. The battery pack of claim 3, wherein:
the first fastening groove and the second fastening groove are formed as an upper end portions of the first cover portion and the second cover portion are curved inwardly of the cell cover in which the at least one battery cell is located.

5. The battery pack of claim 3, wherein:
the first fastening protrusion is formed by bending one end portion of the cap portion adjacent to the first cover portion, and
the second fastening protrusion is formed by bending the other end portion of the cap portion adjacent to the second cover portion.

6. The battery pack of claim 3, wherein:
the first cover portion and the second cover portion further include a blocking portion supporting a lower portion of the at least one battery cell at a lower end portion opposite to the upper end portion.

7. The battery pack of claim 6, wherein:
the blocking portion is formed to extend from the lower end portion of the first cover portion and the second cover portion in an inward direction of the cell cover.

8. The battery pack of claim 7, wherein:
the blocking portion includes a locking structure formed to be bent inwardly of the cell cover from the lower end portion of the first cover portion and the second cover portion.

9. The battery pack of claim 7, wherein:
the blocking portion includes a bent structure bent from the lower end portion of the first cover portion and the second cover portion toward the cap portion and then bent roundly to an opposite side of the cap portion.

10. The battery pack of claim 6, wherein:
the blocking portion includes at least one insertion groove formed by partially removing the blocking portion in a longitudinal direction of the cell cover.

11. The battery pack of claim 1, wherein:
the cell cover includes stainless steel.

12. A device comprising the battery pack according to claim 1.
